# EUROPÄISCHE PATENTSCHRIFT

(11) **EP 2 368 773 B1**
(45) Veröffentlichungstag und Bekanntmachung des Hinweises auf die Patenterteilung: **28.10.2015**
(21) Anmeldenummer: 11001384.4
(22) Anmeldetag: 19.02.2011
(51) Int. Cl.: B60R 21/015

(54) **Kraftfahrzeug mit Mitteln zur Erfassung der Sitzbelegung durch Insassen zur Auslösung von Rückhaltesystemen**
Motor vehicle with means for detecting the seat occupation by passengers for activating restraining systems
Véhicule automobile comprenant des moyens de détection de l'occupation de siège par des passagers pour activer des systèmes de retenu

(30) Priorität: 24.03.2010 DE 102010012455
(43) Veröffentlichungstag der Anmeldung: 28.09.2011
(73) Patentinhaber: Audi AG, 85045 Ingolstadt (DE)
(72) Erfinder: Fürst, Franz, 85114 Buxheim (DE)
(74) Vertreter: Thielmann, Frank

(56) Entgegenhaltungen:
- EP-A2- 1 281 583
- DE-A1- 10 144 878
- DE-A1-102004 022 896
- US-A- 5 678 854

## Beschreibung

Die Erfindung betrifft ein Kraftfahrzeug umfassend wenigstens einen Sitz mit einer zugeordneten Einrichtung zur Erfassung und Klassifizierung der Sitzbelegung in Abhängigkeit wenigstens eines Messwerts wenigstens eines Messmittels, sowie wenigstens eine dem Sitz zugeordnete Rückhalteeinrichtung, insbesondere Airbag, nebst Steuerungseinrichtung, deren Betrieb in Abhängigkeit des Erfassungs- und Klassifizierungsergebnisses, das einem bestimmten Betriebszustand der Steuerungseinrichtung zugeordnet ist, steuerbar ist.

Moderne Kraftfahrzeuge verfügen über unterschiedlichste Sicherheitssysteme, insbesondere zum Schutz der Fahrzeuginsassen. Dem Insassenschutz dienen insbesondere Rückhaltesysteme, die einem Fahrzeugsitz zugeordnet sind. Ein bekanntes System ist ein Airbag, der sich im Falle eines Unfalls innerhalb von Sekundenbruchteilen aufbläst. Dies wird über ein Steuergerät gesteuert. Ist der Sitz, dem der Airbag zugeordnet ist, jedoch nicht belegt, besteht zumeist die Möglichkeit, diesen Airbag abzuschalten. Häufig ist der Airbag auch dann abzuschalten, wenn beispielsweise ein Baby im Tragekorb auf dem Beifahrersitz positioniert ist. Zumeist erfolgt das Abschalten manuell. Nicht zuletzt aufgrund gesetzlicher Vorgaben in manchen Ländern, die zwingend das Ausschalten des Airbags in bestimmten Situationen zur Vermeidung eines Verletzungsrisikos erfordern, sind häufig diverse Sensoriken respektive Erfassungssysteme vorgesehen, um automatisch die Belegung eines Sitzes, beispielsweise eines Beifahrersitzes, zu erfassen und auch zu klassifizieren, ob auf dem Sitz eine große, schwere Person oder eine kleine, leichte Person sitzt. Hierzu werden beispielsweise Druckmatten in die Sitzfläche integriert, die das auf den Sitz einwirkende Gewicht messen. Bekannt sind auch Gurtschlossabfragesysteme, die erfassen, ob der Sicherheitsgurt geschlossen ist, sowie Gurtkraftsensoren, die erfassen können, mit welcher Kraft ein Gurt gespannt ist, sowie ferner Gurtauszugssensoren, die erfassen können, wie weit das Gurtband vom Gurtwickel abgerollt ist.

Mitunter jedoch sind Lastsituationen gegeben, die keine eindeutige Erfassung beziehungsweise Klassifizierung ermöglichen. Dies ist beispielsweise der Fall, wenn eine Tasche oder eine Kiste oder Ähnliches beispielsweise auf dem Beifahrersitz abgestellt wird. Mitunter erfassen Drucksensoren und Ähnliches ein Gewicht, können dieses aber beispielsweise aufgrund der Druckverteilung über die flächig verteilten Drucksensoren nicht konkretisieren respektive hieraus eine konkrete Lastsituation, die eindeutig für die Belegung des Sitzes mit einer Person spricht, erfassen. Gestützt auf dieses nicht eindeutige Erfassungs- und Klassifizierungsergebnis kann folglich keine eindeutige Entscheidung hinsichtlich der Airbagsteuerung getroffen werden.

Eine andere bekannte Rückhalteeinrichtung ist ein pyrotechnischer Gurtstraffer. Dieser wird wie ein Airbag bei einem Unfall betätigt, also gezündet, um den Gurt zu straffen. Auch zu seiner Auslösung wäre eine eindeutige Erfassung und Klassifizierung der Sitzbelegung zweckmäßig

Aus der Druckschrift DE 10 2004 022 896 A1 ist eine Steuerung zum Steuern eines Airbags eines Kraftfahrzeugs bekannt. Diese umfasst eine Deaktivierungseinheit, die in einer Kommunikationsstrecke zwischen dem Airbag und einer Airbagsteuereinheit angeordnet ist. Bei einem ausgeschalteten Airbag wird eine Wameinheit aktiviert, die durch Betätigung einer Betätigungseinheit deaktivierbar ist. Somit wird eine Kenntnisnahme des Nutzers vom aktuellen Schaltzustand des Airbags erreicht.

Die Druckschrift DE 101 44 878 A1 offenbart ein Insassenerkennungssystem. Durch diese werden Sensorsignale eines Fußraumsensors, eines Sitzmattensensors und eines Rücklehnensensors verknüpft, um zu erkennen, um welche Person es sich bei dem Insassen eines Fahrzeugsitzes handelt bzw. ob es sich um einen Gegenstand handelt.

Der Erfindung liegt damit das Problem zugrunde, ein Kraftfahrzeug anzugeben, das die Ermittlung eines belastbaren Erfassungs- und Klassifizierungsergebnisses und daraus resultierend einer fundierten Steuerung der Rückhalteeinrichtung nebst Steuergerät ermöglicht.

Zur Lösung dieses Problems ist bei einem Kraftfahrzeug der eingangs genannten Art erfindungsgemäß vorgesehen, dass die Einrichtung ausgebildet ist, für den Fall, dass in Abhängigkeit des Messwertes ein eindeutiges Erfassungs- und Klassifizierungsergebnis bestimmbar ist, den Betrieb der Rückhaltevorrichtung in Abhängigkeit des Erfassungs- und Klassifizierungsergebnisses zu steuern und für den Fall, dass in Abhängigkeit des Messwertes kein eindeutiges Erfassungs- und Klassifizierungsergebnis bestimmbar ist, automatisch wenigstens eine akustische und/oder optische Information betreffend eine Belegung und/oder Klassifizierung an den Fahrer auszugeben, die diesen zur Gabe eines einrichtungsseitig zu erfassenden belegungs- oder klassifizierungsbezogenen Antwortsignals auffordert, sowie den Betrieb der Rückhalteeinrichtung in Abhängigkeit der Signalgabe zu steuern.

Tritt ein nicht eindeutiger Lastfall auf, erfasst also die Einrichtung beispielsweise Druckmesswerte und Ähnliches, die nicht eindeutig dafür sind, dass tatsächlich eine Person auf dem Sitz Platz genommen hat, aber auch nicht eindeutig sind, dass von einer Nichtbelegung auszugehen ist, so wird beim erfindungsgemäßen Kraftfahrzeug der Fahrer aktiv eingebunden, um zu einem belastbaren Erfassungsergebnisses zu gelangen. In einem solchen nicht eindeutigen Erfassungsfall wird seitens der Einrichtung automatisch wenigstens eine akustische und/oder optische Information ausgegeben, die sich zunächst an den Fahrer (bei tatsächlicher Belegung des Beifahrersitzes kann sie sich natürlich auch an den Beifahrer richten) richtet. Mit dieser Information wird der Fahrer aufgefordert, aktiv ein Antwortsignal zu geben, das einrichtungsseitig erfasst und verarbeitet werden kann. Die ausgegebene akustische und/oder optische Information kann beispielsweise in Form einer Frage gegeben werden. Zum Beispiel wird der Fahrer konkret gefragt, ob der Beifahrersitz belegt ist. Über diese Frage wird er zwangsläufig zur Gabe eines Antwortsignals aufgefordert. Auf diese Frage kann der Fahrer entweder mit "ja" oder "nein" antworten. Das bejahende oder verneinende Antwortsignal wird in jedem Fall einrichtungsseitig erfasst.

Bejaht der Fahrer die Belegung des Fahrzeugsitzes, so kann das Erfassungs- und Klassifizierungsergebnis abschließend ermittelt werden, nachdem der Fahrer aktiv die tatsächliche Belegung bestätigt hat. Das heißt, dass ein von der Einrichtung vermuteter Lastfall vom Fahrer bestätigt wurde. Hieraufhin kann die Einrichtung z. B. entweder den bereits zugeschalteten Airbag zugeschaltet lassen, oder, sollte dieser zuvor abgeschaltet gewesen sein, den Airbag zuschalten. Entsprechendes gilt z.B. bezüglich eines Gurtstraffers.

Verneint der Fahrer die von der Einrichtung ausgegebene Frageinformation, so wird das zuvor unsichere Erfassungs- und Klassifizierungsergebnis ebenfalls dahingehend eindeutig, dass keine Sitzbelegung gegeben ist. In einem solchen Fall kann, je nach Systemausgestaltung, entweder der Airbag oder Gurtstraffer zugeschaltet bleiben, oder abgeschaltet werden, wobei die endgültige Steuerungsentscheidung die Erfassungs- und Klassifizierungseinrichtung fällt.

Insgesamt ermöglicht also das erfindungsgemäße Kraftfahrzeug die aktive Einbindung des Fahrers in die Entscheidungs- oder Ergebnisfindung in dem Fall, dass die Erfassungs- und Klassifizierungseinrichtung aufgrund der ihr vorliegenden Messwerte oder Informationen nicht zu einem eindeutigen Ergebnis kommt. Dies ermöglicht es, die konkrete Lastsituation korrekt aufklären und die entsprechenden Steuerentscheidungen treffen zu können. Denn letztlich bestätigt der Fahrer einen von der Einrichtung angenommenen Belegungs- und/oder Klassifizierungszustand, wenn er ein bejahendes Antwortsignal gibt, beziehungsweise verneint einen solchen angenommenen Zustand, wenn er ein verneinendes Antwortsignal gibt. Dies bietet die Möglichkeit, eine Rückhalteeinrichtung im Falle eines Unfalls gezielt auszulösen, wenn dies aufgrund einer tatsächlich gegeben Sitzbelegung erforderlich ist, bzw. eine Rückhalteeinrichtung dann nicht auszulösen, wenn es wegen Nicht-Belegung des zugeordneten Sitzes nicht erforderlich ist, so dass sie im Falle einer späteren Reparatur nicht zu erneuern ist und insgesamt eine Schadensbegrenzung erreicht werden kann.

Bestätigt der Fahrer beispielsweise eine Belegung des Beifahrersitzes auf die erste Frageinformation, die die Einrichtung ausgegeben hat, so kann hierauf gestützt bereits grundsätzlich eine Steuerungsentscheidung gefällt werden. Mitunter ist jedoch noch eine detailliertere Auflösung der Belegungssituation respektive genauere Klassifizierung zweckmäßig, beispielsweise dann, wenn ein Gepäckstück wie eine Tasche oder Ähnliches auf dem Beifahrersitz steht. Zwar ist eine Belegung des Sitzes gegeben, jedoch nicht durch eine Person, weshalb beispielsweise der Airbag oder der Gurtstraffer auszuschalten wäre. Damit die Einrichtung die Sitzbelegung noch weiter auflösen kann sieht eine zweckmäßige Weiterbildung der Erfindung vor, dass die Einrichtung zur Ausgabe einer ersten Information und in Abhängigkeit des vom Fahrer gegebenen Antwortsignals zur Gabe wenigstens einer weiteren Information, die den Fahrer zur Gabe eines weiteren Antwortsignals auffordert, ausgebildet ist. Das heißt, dass an den Fahrer nach Gabe eines ersten Antwortsignals wenigstens eine zweite Frageinformation gerichtet wird, beispielsweise dahingehend, ob auf dem Beifahrersitz eine Person sitzt, oder ob sich darauf ein Gegenstand befindet. Der Fahrer kann hierauf wiederum ein bestätigendes oder verneinendes Antwortsignal, je nach gestellter Frage, geben. Hierauf hin liegen nun der Einrichtung zwei Antwortsignale vor, gestützt auf welche sie ein eindeutiges Erfassungs- und Klassifizierungsergebnis erstellen und daraufhin die Airbagsteuerung vornehmen kann. Beispielsweise wird dem Fahrer als erste Frage gestellt "Beifahrersitz belegt ja/nein?". Im Falle eines bejahenden Antwortsignals wird ihm als zweite Frage gestellt "Sitzbelegung durch Person ja/nein?". Denkbar wäre aber auch als erste Frage Sitzbelegung durch Person ja/nein?", und im Falle eines bejahenden Antwortsignals als zweite Frage "Person groß/klein?". Auch eine solche Frage lässt eine weitere Auflösung der Lastsituation zu, insbesondere, wenn nur geringe Druckwerte über integrierte Drucksensoren oder Ähnliches erfasst werden. Selbstverständlich ist es denkbar, auch mehr als zwei Fragen zu stellen und Antwortsignale aufzunehmen. Insgesamt ermöglicht also die Stellung zweier oder mehrerer Fragen eine noch tiefer gehende Auflösung der Lastsituation.

Die Einrichtung selbst kann wie beschrieben entweder die Zuschaltung oder die Abschaltung der Rückhalteeinrichtung, z.B. Airbags, je nach gegebener Lastsituation respektive Individualisierung der Last, ansteuern. Denkbar ist es aber auch, über die Einrichtung in Abhängigkeit des Erfassungs- oder Klassifizierungsergebnisses wenigstens einen Betriebsparameter Rückhalteeinrichtung, z.B. des Airbags oder Gurtstraffers einzustellen. Hierüber kann beispielsweise eingestellt werden, in welcher Geschwindigkeit beziehungsweise wie weit der Airbag im Kollisionsfall aufgeblasen werden soll, mit welchem Druck etc. Die Einstellung eines Betriebsparameters ist insbesondere dann zweckmäßig, wenn eine eindeutige Individualisierung gegeben ist, dahingehend, ob beispielsweise ein Kind oder ein Erwachsener auf dem Beifahrersitz sitzt. Denkbar ist natürlich auch, je nach Individualisierung der Last Betriebsparameter mehrerer Airbags, die allesamt dem Sitz zugeordnet und lokal verteilt sind, zu steuern. Denn bei Belegung des Sitzes mit einem Kind sind im Kollisionsfall die Airbags anders beziehungsweise andere Airbags aufzufalten, als bei Belegung mit einem großen Erwachsenen.

Die akustische Information kann als Sprachangabe ausgegeben werden. Moderne Kraftfahrzeuge verfügen über sehr gute Infotainmentsysteme, über die ohne weiteres über die fahrzeugseitig verwahrten Lautsprecher die entsprechende Sprachinformation als Frage ausgegeben werden kann. Eine optische Information wird als Text an einer Anzeigeeinrichtung ausgegeben, beispielsweise dem in modernen Kraftfahrzeugen üblicherweise verbauten LCD-Display. An diesem kann der Fahrer eindeutig die Textinformation erfassen und hierauf reagieren. Gegebenenfalls kann in diesem Fall eine akustische Unterstützung, die den Fahrer auf die ihm angezeigte optische Information hinweist, erfolgen, oder die Information kann blinken und Ähnliches.

Die Signalgabe kann als Spracheingabe erfolgen. Moderne Kraftfahrzeuge verfügen häufig auch über Sprachdialogsysteme, über die der Fahrer verschiedene Systeme oder Module per Sprache steuern kann. Es ist nun ohne weiteres denkbar, dass er sein Antwortsignal als Spracheingabe gibt. Beispielsweise kann er auf die akustisch gestellte Frage "Beifahrersitz belegt?" akustisch mit "ja" antworten, die Erfassungs- und Klassifizierungseinrichtung erfasst diese bestätigende Spracheingabe und kann entsprechend reagieren. Alternativ zur Signalgabe als Spracheingabe ist es auch denkbar, die Signalgabe über ein oder mehrere manuelle Eingabemittel, insbesondere in Form von Tasten, zu ermöglichen. Denkbar ist es auch, hierfür eine berührungsempfindliche Anzeigeeinrichtung zu verwenden, also einen Touchscreen, an dem gleichzeitig die zu beantwortende Information ausgegeben wird. Das heißt, dass an ein und derselben Anzeigeeinrichtung einerseits die Informationsausgabe, andererseits die Signaleingabe erfolgt. Der Fahrer muss lediglich das entsprechende Antwortfeld "ja" oder "nein", das ihm am Touchscreen angezeigt wird, berühren, um das Signal zu geben.

Die Signalgabe dient wie beschreiben dazu, einen Erfassungs- und Klassifizierungszustand zu verifizieren und diese Verifizierung durch aktives Einbinden des Fahrers vorzunehmen. Um dem Fahrer, der aufgrund der an ihn ausgegebenen Informationsfrage weiß, dass möglicherweise eine Veränderung des Steuerungszustandes der Rückhalteeinrichtung und Ähnliches ansteht, eine Information zu geben, wie nun der konkrete Betriebszustand des Airbags oder des Gurtstraffers ist, sieht eine zweckmäßige Weiterbildung vor, dass in Abhängigkeit der Gabe des Antwortsignals eine den nachfolgend gegebenen Betriebszustand der Rückhalteeinrichtung angebende akustische und/oder optische Information ausgebbar ist. Das heißt, dass der Fahrer nach Gabe des einen oder der mehreren Antwortsignale eine Information darüber erhält, wie nun konkret der Betriebszustand beispielsweise des Beifahrerairbags ist. Beispielsweise wird ihm akustisch per Lautsprechersystem und/oder optisch per Anzeigeeinrichtung mitgeteilt, dass der "Beifahrerairbag aktiv" ist oder Ähnliches.

Eine zweckmäßige Weiterbildung der Erfindung sieht schließlich vor, dass die Einrichtung zum Speichern erfasster Belegungs- und/oder Klassifizierungsergebnisse und dazu gegebener fahrerseitiger Antwortsignale sowie zum Vergleichen eines neu erfassten Belegungs- und/oder Klassifizierungsergebnisses mit gespeicherten Belegungs- und/oder Klassifizierungsergebnissen und bei hinreichender Übereinstimmung zur Ausgabe wenigstens einer in Abhängigkeit der früher gegebenen Antwortsignale erstellten Information ausgebildet ist. Die Einrichtung erfasst also kontinuierlich und chronologisch nicht eindeutige Belegungs- und/oder Klassifizierungsergebnisse sowie die dazu vom Fahrer gegebenen Antwortsignale auf die einrichtungsseitig ausgegebenen Informationsfragen. Das heißt, dass im Laufe der Zeit diverse unterschiedliche und nicht eindeutige Lastsituationen gespeichert werden, wie auch die zugehörigen, vom Fahrer gegebenen Antwortsignale. Enthalten die gespeicherten Belegungs- und/oder Klassifizierungsergebnisse, die selbstverständlich auch die ihnen zugrundeliegenden, nicht eindeutigen Messwerte wie Druckmesswerte und Druckverteilungen etc. umfassen, mehrere gleiche oder ähnliche Ergebnisse insbesondere hinsichtlich der zugrundeliegenden Messwerte etc., so kann hieraus eine häufigere Wiederholung uneindeutiger Lastfälle ermittelt werden. Der Fahrer wird zu diesen vergleichbaren Lastfällen stets dieselbe Antwort gegeben haben. Stellt der Fahrer also beispielsweise häufig einen Einkaufskorb auf den Beifahrersitz, und wird dies zumeist als nicht eindeutige Lastfall erkannt, so sind den gespeicherten Ergebnissen stets gleiche oder sehr ähnliche Messwertgrundlagen zugeordnet, wie auch stets gleiche Fahrerantwortsignale, nämlich eine Bestätigung, dass der Sitz belegt ist, beziehungsweise bei weiterer, tiefer gehender Ausbaustufe, dass es sich hierbei nicht um eine Person handelt.

Die Einrichtung ist nun dazu ausgebildet, ein aktuell aufgenommenes, nicht eindeutiges Belegungs- und/oder Klassifizierungsergebnis mit früher aufgenommenen Belegungs- und/oder Klassifizierungsergebnissen zu vergleichen, das heißt, dass die ihnen zugrundeliegenden Messwerte etc. miteinander verglichen werden. Ergibt sich eine Übereinstimmung, das heißt, wird wiederum ein Lastfall erfasst, der mit mehreren früheren Lastfällen, die durch die Antwortsignale des Fahrers "aufgelöst" wurden, vergleichbar beziehungsweise ähnlich ist, so kann das System nun davon ausgehen, dass wiederum ein solcher Lastfall vorliegt, zu dem jedoch das zu erwartende Antwortsignal eigentlich bekannt ist. Die Einrichtung ist nun in der Lage, eine quasi modifizierte Information zu erstellen und auszugeben, die in Abhängigkeit der früher gegebenen Antwortsignale erstellt wird. Ausgehend vom Beispiel des Einkaufskorbs auf dem Fahrersitz, welche Situation der Fahrer beispielsweise über zwei Antwortsignale, nämlich über "Sitzbelegung ja" und "Person nein", präzisiert hat, kann das System nun beispielsweise nur eine Frage stellen, nämlich "Sitzbelegung nicht durch Person". Der Fahrer muss in diesem Fall nur noch einmal antworten, in diesem Fall beispielsweise mit "ja". Werden die Antwortsignale durch Spracheingabe gegeben, so kann das System beispielsweise in geeignet tiefer Ausbaustufe konkret anfragen, womit der Beifahrersitz belegt ist. Gibt der Fahrer beispielsweise mehrfach "Einkaufskorb" zur Antwort, so kann die Einrichtung diese Spracheingabe erkennen und hierüber eine eindeutige Belegungsklassifizierung vornehmen, die auch den unterschiedlichen, nahezu gleichen Belegungs- und/oder Klassifizierungsergebnissen zugeordnet wird. Tritt nun erneut ein derartiger vergleichbarer Belegungs-/Klassifizierungsfall auf, so kann die Einrichtung sogleich eine geeignete Frage "Sitzbelegung durch Einkaufskorb" stellen. Das heißt, dass das System beziehungsweise die Einrichtung quasi lernt und sich selbstständig hinsichtlich der Klassifizierung fortentwickelt.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung eines erfindungsgemäßen Kraftfahrzeugs, und
- Fig. 2: eine Prinzipdarstellung der relevanten Kraftfahrzeugkomponenten zur eindeutigen Sitzbelegungserfassung.

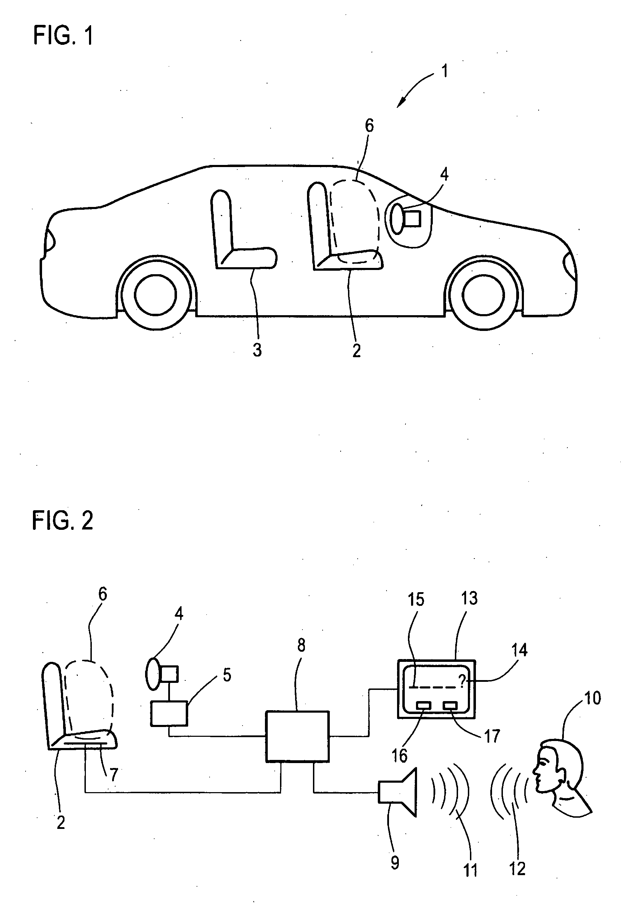

Fig. 1 zeigt ein erfindungsgemäßes Kraftfahrzeug 1, umfassend im gezeigten Beispiel mehrere Sitze 2, 3, denen jeweils wenigstens eine Rückhalteeinrichtung, hier exemplarisch ein Airbag 4 zugeordnet ist, wobei nur bezüglich des Beifahrersitzes 2 ein solcher Airbag 4 gezeigt ist. Üblicherweise sind natürlich einem Sitz mehrer Airbags sowie z.B. auch eine Rückhalteeinrichtung in Form eines pyrotechnischen Gurtstraffers zugeordnet, die der Übersichtlichkeit wegen nicht einzeln dargestellt sind. Der Airbag 4, der, siehe Fig. 2, eine ihn auslösende Steuerungseinrichtung 5 besitzt, ist zu- oder abschaltbar, beziehungsweise sind die Betriebsparameter, mit denen die Auslösung gesteuert wird (Aufblasgeschwindigkeit, Aufblasvolumen, Aufblasdruck etc.), veränderbar. Dies ermöglicht es, den Betrieb des Airbags 4 variabel zu steuern, insbesondere in Abhängigkeit des Vorhandenseins oder nicht Vorhandenseins einer in Fig. 1 gestrichelt gezeigten Last 6. In entsprechender Weise sind natürlich auch die anderen dem Sitz zugeordneten, jedoch nicht gezeigten Rückhalteeinrichtung steuerbar, gegebenenfalls über eine gemeinsame Steuerungseinrichtung, gegebenenfalls über eigene Steuerungseinrichtungen.

Fig. 2 zeigt in Form einer Prinzipdarstellung die relevanten Komponenten des Kraftfahrzeugs, die eine genaue Erfassung einer Belegung im gezeigten Beispiel des Beifahrersitzes 2 und eine Klassifizierung der Last 6 ermöglichen.

Im Sitz 2 ist angenommener Maßen ein Messmittel 7 z. B. in Mattenform integriert, das beispielsweise eine Druckerfassung ermöglicht, und über das erfasst werden kann, ob ein Gegenstand 6 überhaupt auf den Sitz ist. Die Messsignale oder Messwerte werden einer Einrichtung 8 gegeben, die der Erfassung und Klassifizierung einer möglichen Belegung des Sitzes 2 dient. Aus den erhaltenen Messwerten des Erfassungsmittels 7, beispielsweise Druckmesswerten, die lokal verteilt über die Sitzfläche erfasst werden, kann nun die Einrichtung 8 entscheiden, ob eine Last 6 auf dem Beifahrersitz 2 sitzt oder nicht. Es kann aber auch zu Zweifelsfällen kommen, in denen die Messwerte kein eindeutiges Erfassungs- und/oder Klassifizierungsergebnis zulassen.

Ist dies der Fall, so wird seitens der Einrichtung 8 beispielsweise über ein Lautsprechersystem 9 eine akustische Information ausgegeben, mit der der Fahrer 10 beispielsweise konkret gefragt wird, ob der Beifahrersitz 2 belegt ist. Der Fahrer 10 muss nun aktiv ein Antwortsignal geben, das diese Frage beantwortet. Dies kann beispielsweise ebenfalls durch eine Sprachantwort erfolgen, die über das Lautsprechersystem 9 erfasst wird und deren Inhalt von der Einrichtung 8 verarbeitet wird. Der Fahrer 10 kann hierüber also bestätigen, dass eine Last auf dem Beifahrersitz 2 ist, er kann dies aber auch verneinen, wenn keine Last aufgenommen ist. In Fig. 2 ist die ausgegebenen akustische Information mit 11 und die vom Fahrer 10 gegebene Sprachsignalantwort mit 12 dargestellt.

Alternativ zur Gabe einer akustischen Information und eines akustischen Antwortsignals ist es auch möglich, die Information an einer Anzeigeeinrichtung 13, vorzugsweise einem Touchscreen 14, auszugeben. Die Information 15 wird hier in Textform als Frage ausgegeben, beispielsweise "Beifahrersitz belegt?". Die Gabe des Antwortsignals kann über den Touchscreen 14 über geeignete Antwortfelder 16 (z. B. "ja") und 17 (z. B. "nein) gegeben werden, der Fahrer muss hierzu lediglich das entsprechende Feld berühren. Auch hierüber kann der Fahrer 10 also aktiv den gegebenen Belegungszustand beschreiben.

Je nach dem, welches Antwortsignal der Fahrer nun gegeben hat, entscheidet die Einrichtung 8, wie der Betriebszustand des Airbags 4 respektive seiner Steuerungseinrichtung 5 sein soll, ob er also zugeschaltet wird, ob er abgeschaltet wird, oder ob ein besonderer Betriebsparameter seitens der Steuerungseinrichtung 5 entsprechend eingestellt werden muss etc. Ergibt sich beispielsweise, dass keine Last 6 auf dem Beifahrersitz sitzt, kann der Airbag 4 beispielsweise ausgeschaltet werden. Ist eine Last vorhanden, wird er zugeschaltet. Sofern über die Einrichtung 8 auch eine konkrete Klassifizierung der Last dahingehend möglich ist, dass es sich dabei beispielsweise um eine kleine Person oder ein Kind handelt, kann wiederum eine entsprechende Betriebsparametereinstellung erfolgen.

Denkbar ist es auch, über die Einrichtung 8 nicht nur eine akustische und/oder optische Information zu geben, sondern quasi iterativ einen Dialog mit dem Fahrer 10 zu führen, um die Informationstiefe zu erhöhen. Beispielsweise kann im Rahmen einer ersten akustischen/optischen Informationsausgabe angefragt werden, ob überhaupt eine Sitzbelegung gegeben ist. Bejaht dies der Fahrer 10 durch Gabe eines Sprachantwortsignals 12 oder über Berührung z. B. des Antwortfelds 16, so kann als nächste Frageinformation ausgegeben werden, ob die Last 6 eine Person ist. Bejaht dies der Fahrer, kann die Einrichtung 8 von einer Sitzbelegung durch eine Person ausgehen, es liegt also eine eindeutige Belegungs- und Klassifizierungserfassung vor. Daraufhin kann beispielsweise der Airbag 4 aktiv zugeschaltet werden. Verneint der Fahrer die Frage "Sitzbelegung durch Person?", so ist klar, dass es sich hierbei um einen Gegenstand handeln muss, ein Einschalten des Airbags 4 ist dann nicht erforderlich.

Die Einrichtung 8 ist ferner in der Lage, nicht eindeutige Erfassungs- und Klassifizierungsergebnisse und die diesen zugeordneten Messwerte oder sonstigen Parameter, die zur Bildung der nicht eindeutigen Ergebnisse geführt haben, abzuspeichern. Zusätzlich werden auch die auf die gestellten Frageinformationen gegebenen Antwortsignale abgespeichert. Wiederholen sich nun solche nicht eindeutigen Ergebnisse, so kann die Einrichtung 8 ein Schema herausarbeiten. Wird nun aktuell wiederum ein vergleichbares nicht eindeutiges Ergebnis ermittelt, und sind die diesem zugrundeliegenden Messwerte beziehungsweise Parameter und Ähnliches vergleichbar mit den Messwerten und Parametern der bereits abgespeicherten vergleichbaren Ergebnisse, so kann die Einrichtung 8 davon ausgehen, dass der Fahrer wiederum ein gleiches Antwortsignal gibt. Hierauf gestützt kann nun bereits die erste ausgegebene Information modifiziert respektive auf den dann relativ sicher vermuteten Lastfall abgestellt formuliert werden. Handelt es sich beispielsweise bei der Last um einen Einkaufskorb, der ein bestimmtes, jedoch nicht eindeutiges Druckmuster seitens des Erfassungsmittels 7 liefert und hat der Fahrer jedes Mal auf beispielsweise die erste Frage "Sitzbelegung ja?" mit "ja" geantwortet und auf die zweite Frage "Sitzbelegung durch Person?" mit nein" geantwortet, so kann nun sogleich mit nur einer Information "Sitzbelegung nicht durch Person?" sich an den Fahrer gewendet werden. Das heißt, dass die Einrichtung 8 quasi selbstlernend ist.

Hat die Einrichtung 8 ein eindeutiges Ergebnis erstellt und die Beibehaltung oder Einstellung eines bestimmten Betriebszustands des Airbags 4 respektive seiner Steuerungseinrichtung 5 veranlasst, so kann die Einrichtung 8 über die Anzeigeeinrichtung 13 oder das Lautsprechersystem 9 dem Fahrer eine entsprechende Mitteilung geben, dass beispielsweise der Beifahrersitzairbag aktiv oder inaktiv ist. Der Fahrer erhält hierüber also eine Information darüber, wie nun der Betriebszustand des dem Beifahrersitz 2 zugeordneten Sicherheitssystems ist.

Insgesamt ermöglicht die erfindungsgemäß vorgesehene aktive Einbindung des Fahrers in die endgültige Findung des Belegungs- und/oder Klassifizierungsergebnisses eine Erhöhung der Systemsicherheit, da das gegebene Wissen des Fahrers über die Ist-Situation berücksichtigt wird. Selbstverständlich können weitere dem Sitz zugeordnete, in der Steuerung mit dem gezeigten Airbag 4 gegebenenfalls gekoppelte Airbags oder ein Gurtstraffer in gleicher Weise in Abhängigkeit der konkreten Sitzbelegungserfassung gesteuert werden, wenngleich das Beispiel nur bezüglich eines Airbags erläutert wurde.

## Patentansprüche

1. Kraftfahrzeug (1) umfassend wenigstens einen Sitz (2, 3) mit einer zugeordneten Einrichtung (8) zur Erfassung und Klassifizierung der Sitzbelegung in Abhängigkeit wenigstens eines Messwertes wenigstens eines Messmittels (7), sowie wenigstens eine dem Sitz (2, 3) zugeordnete Rückhalteeinrichtung (4), insbesondere Airbag, nebst Steuerungseinrichtung (5), deren Betrieb in Abhängigkeit des Erfassungs- und Klassifizierungsergebnisses, das einem bestimmten Betriebszustand der Steuerungseinrichtung (5) zugeordnet ist, steuerbar ist,
**dadurch gekennzeichnet,**
**dass** die Einrichtung (8) ausgebildet ist, für den Fall, dass in Abhängigkeit des Messwertes ein eindeutiges Erfassungs- und Klassifizierungsergebnis bestimmbar ist, den Betrieb der Rückhaltevorrichtung (4) in Abhängigkeit des Erfassungs- und Klassifizierungsergebnisses zu steuern und für den Fall, dass in Abhängigkeit des Messwertes kein eindeutiges Erfassungs- und Klassifizierungsergebnis bestimmbar ist, automatisch wenigstens eine akustische und/oder optische Information (12, 15) betreffend eine Belegung und/oder Klassifizierung an den Fahrer (10) auszugeben, die diesen zur Gabe eines einrichtungsseitig zu erfassenden belegungs- oder klassifizierungsbezogenen Antwortsignals (12) auffordert, sowie den Betrieb der Rückhalteeinrichtung (4) in Abhängigkeit der Signalgabe zu steuern.

2. Kraftfahrzeug nach Anspruch 1,
**dadurch gekennzeichnet,**
**dass** die Einrichtung (8) zur Ausgabe einer ersten Information und in Abhängigkeit des vom Fahrer (10) gegebenen Antwortsignals (12) zur Gabe wenigstens einer weiteren Information, die den Fahrer (10) zur Gabe eines weiteren Antwortsignals (12) auffordert, ausgebildet ist.

3. Kraftfahrzeug nach Anspruch 1 oder 2,
**dadurch gekennzeichnet,**
**dass** die Einrichtung (8) zur Zu- oder Abschaltung des Airbags (4) oder zur Einstellung wenigstens eines Betriebsparameters der Rückhalteeinrichtung (4) ausgebildet ist.

4. Kraftfahrzeug nach einem der vorangehenden Ansprüche,
**dadurch gekennzeichnet,**
**dass** die akustische Information (11) als Sprachansage ausgebbar ist.

5. Kraftfahrzeug nach einem der vorangehenden Ansprüche,
**dadurch gekennzeichnet,**
**dass** die optische Information (15) als Text an einer Anzeigeeinrichtung (13) ausgebbar ist.

6. Kraftfahrzeug nach einem der vorangehenden Ansprüche,
**dadurch gekennzeichnet,**
**dass** die Signalgabe als Spracheingabe (12) oder über ein manuelles Eingabemittel, insbesondere eine Taste oder ein berührungsempfindliche Anzeigeeinrichtung (14, 16, 17), gebbar ist.

7. Kraftfahrzeug nach einem der vorangehenden Ansprüche
**dadurch gekennzeichnet,**
**dass** in Abhängigkeit der Gabe des Antwortsignals eine den nachfolgend gegebenen Betriebszustand der Rückhalteeinrichtung (4) angebende akustische und/oder optische Information ausgebbar ist.

8. Kraftfahrzeug nach einem der vorangehenden Ansprüche,
**dadurch gekennzeichnet,**
**dass** die Einrichtung (8) zum Speichern erfasster Belegungs- und/oder Klassifizierungsergebnisse und dazu gegebener fahrerseitiger Antwortsignale sowie zum Vergleichen eines neu erfassten Belegungs- und/oder Klassifizierungsergebnisses mit gespeicherten Belegungs- und/oder Klassifizierungsergebnissen und bei hinreichender Übereinstimmung zur Ausgabe wenigstens einer in Abhängigkeit der früher gegebenen Antwortsignale erstellten Information ausgebildet ist.

## Claims

1. Motor vehicle (1) comprising at least one seat (2, 3) having an associated device (8) for detecting and classifying the seat occupancy depending on at least one measured value of at least one measurement means (7), and comprising at least one restraint device (4), in particular an airbag, including a control device (5), which restraint device is associated with the seat (2, 3) and the operation of which can be controlled depending on the detection and classification result, which is associated with a certain operating state of the control device (5),
**characterised in that**
the device (8) is designed to control the operation of the restraint device (4) depending on the detection and classification result in the event that a clear detection and classification result can be determined on the basis of the measured value, and, in the event that no clear detection and classification result can be determined on the basis of the measured value, to automatically output to the driver (10) at least one piece of acoustic and/or visual information (12, 15) relating to an occupancy and/or classification, which information prompts the driver to give a response signal (12) which relates to the occupancy or classification and is to be detected by the device, and to control the operation of the restraint device (4) depending on the signal given.

2. Motor vehicle according to claim 1, **characterised in that** the device (8) is designed to output a first piece of information and, depending on the response signal (12) given by the driver (10), to give at least one further piece of information which prompts the driver (10) to give a further response signal (12).

3. Motor vehicle according to either claim 1 or claim 2, **characterised in that** the device (8) is designed to switch the airbag (4) on or off or to set at least one operating parameter of the restraint device (4).

4. Motor vehicle according to any of the preceding claims, **characterised in that** the piece of acoustic information (11) can be output as a voice message.

5. Motor vehicle according to any of the preceding claims, **characterised in that** the piece of visual information (15) can be output as text on a display device (13).

6. Motor vehicle according to any of the preceding claims, **characterised in that** the signal can be provided as a voice input (12) or via a manual input means, in particular a button or a touch-sensitive display device (14, 16, 17).

7. Motor vehicle according to any of the preceding claims, **characterised in that** a piece of acoustic and/or visual information which specifies the subsequently output operating state of the restraint device (4) can be output depending on the provision of the response signal.

8. Motor vehicle according to any of the preceding claims, **characterised in that** the device (8) is designed to store detected occupancy and/or classification results and, in addition, response signals given by the driver, and to compare a newly detected occupancy and/or classification result with stored occupancy and/or classification results and, when there is a sufficient match, to output at least one piece of information which is generated on the basis of the response signal previously given.

## Revendications

1. Véhicule automobile (1) comprenant au moins un siège (2, 3) pourvu d'un dispositif dédié (8) pour enregistrer et classer l'occupation des sièges en fonction d'au moins une valeur de mesure d'au moins un moyen de mesure (7) ainsi que d'au moins un dispositif de retenue (4) affecté au siège (2, 3), en particulier un coussin d'air, avec un dispositif de commande (5) dont le fonctionnement peut être commandé en fonction du résultat d'enregistrement et de classification qui est affecté à un certain état de fonctionnement du dispositif de commande (5),
**caractérisé en ce que** :
le dispositif (8) est conçu pour, dans le cas où l'on peut déterminer en fonction de la valeur de mesure un résultat d'enregistrement et de classification clair, commander le fonctionnement du dispositif de retenue (4) en fonction du résultat d'enregistrement et de classification et pour, dans le cas où l'on ne peut déterminer en fonction de la valeur de mesure de résultat d'enregistrement et de classification clair, délivrer au chauffeur (10) automatiquement au moins une information acoustique et/ou optique (12, 15) concernant une occupation et/ou une classification, qui demande à celui-ci de délivrer un signal de réponse touchant à l'occupation ou à la classification à enregistrer côté dispositif (12) ainsi que commander le fonctionnement du dispositif de retenue (4) en fonction de la délivrance du signal.

2. Véhicule automobile selon la revendication 1,
**caractérisé en ce que** :
le dispositif (8) est conçu pour délivrer une première information et, en fonction du signal de réponse (12) délivré par le chauffeur (10), pour délivrer au moins une autre information, qui demande au chauffeur (10) de délivrer un autre signal de réponse (12).

3. Véhicule automobile selon la revendication 1 ou la revendication 2,
**caractérisé en ce que** :
le dispositif (8) est conçu pour connecter ou déconnecter le coussin d'air (4) ou pour régler au moins un paramètre de fonctionnement du dispositif de retenue (4).

4. Véhicule automobile selon l'une quelconque des revendications précédentes,
**caractérisé en ce que** :
l'information acoustique (11) peut être délivrée sous la forme d'une information vocale.

5. Véhicule automobile selon l'une quelconque des revendications précédentes,
**caractérisé en ce que** :
l'information optique (15) peut être délivrée sous la forme d'un texte sur un dispositif d'affichage (13).

6. Véhicule automobile selon l'une quelconque des revendications précédentes,
**caractérisé en ce que** :
la délivrance de signaux peut se faire sous la forme d'une entrée vocale (12) ou via un moyen d'entrée manuel, en particulier une touche ou un dispositif d'affichage tactile (14, 16, 17).

7. Véhicule automobile selon l'une quelconque des revendications précédentes,
**caractérisé en ce que** :
en fonction de la délivrance du signal de réponse, on peut délivrer une information acoustique et/ou optique indiquant l'état de fonctionnement du dispositif de retenue (4) suivant consécutivement.

8. Véhicule automobile selon l'une quelconque des revendications précédentes,
**caractérisé en ce que** :
le dispositif (8) est conçu pour mémoriser les résultats enregistrés d'occupation et/ou de classification et les signaux de réponse côté chauffeur qui lui sont fournis ainsi que pour comparer un résultat d'occupation et/ou de classification nouvellement enregistré avec des résultats d'occupation et/ou de classification mémorisés et, dans le cas d'une coïncidence suffisante, pour délivrer au moins une information établie en fonction des signaux de réponse présentés antérieurement.
